# EUROPEAN PATENT APPLICATION

(11) **EP 3 065 260 A1**
(43) Date of publication of application: **07.09.2016**
(21) Application number: 15157678.2
(22) Date of filing: 04.03.2015
(51) Int. Cl.: H02J 9/08, B64F 1/34

(54) **Ground power unit with lower noise and pollution emission**

(71) Applicant: Illinois Tool Works Inc., Glenview, IL 60025 (US)
(72) Inventor: Nielsen, Bo Vork, 5462 Morud (DK); Dahl, Søren Risgaard, 5250 Odense SV (DK); Tindall, Les, Kingswood, Kent ME173NT (GB)
(74) Representative: Liefhold, Christian

(57) **Abstract**

The invention relates to a ground power unit for supplying power to an aircraft parked on the ground, the ground power unit comprising an engine and an electric generator for supplying power to the aircraft, whereby the electric generator is configured to be driven by the engine, an electric energy reservoir, which is set up for being charged by an output of the generator and set up for temporarily providing electric power to the aircraft, an inverter for transforming an output of the energy reservoir to an alternating power output of the inverter, wherein the engine is a gaseous-fueled engine.

The invention further relates to a method for operating such a ground power unit.

## Description

This invention relates to ground power units (GPUs) for supplying power to an aircraft on the ground.

According to the prior art EP 1 756 937 ground power units are typically diesel driven because of the long lifetime and high reliability of a diesel engine and because diesel engines show a sufficient transient behavior for adapting the diesel engine quick enough to sudden load increases.

The inventors found it very disadvantageous that diesel engines require complex and expensive filters to comply with official environmental requirements. As an unwanted side effect, diesel engines are furthermore loud. The object of the invention therefore was to provide a sufficiently powerful ground power unit that is less complex and that has less unwanted side effects.

This object is achieved by the subject matter of the independent claims; preferred embodiments are specified by the dependent claims.

Particularly, this object is achieved by a, preferably mobile, ground power unit (GPU) for supplying power to an aircraft parked on the ground, the ground power unit comprising an engine and an electric generator for supplying power to the aircraft, whereby the electric generator is configured to be driven by the engine, an electric energy reservoir, which is set up for being charged by an output of the generator and set up for temporarily providing electric power to the aircraft, an inverter for transforming an output of the energy reservoir to an alternating power output of the inverter, wherein the engine is a gaseous-fueled engine.

The object of the invention is also achieved by a method for powering an aircraft parked on the ground by a GPU comprising the steps:
- running an engine of the GPU;
- supplying power to the aircraft by an electric generator of GPU, whereby the electric generator is driven by the engine;
- charging an electric energy reservoir of the ground power unit by an output of the generator;
- temporarily providing electric power from the energy reservoir to the aircraft;
whereby an output of the energy reservoir is transformed to an alternating power output by an inverter,
wherein the engine is a gaseous-fueled engine.

Gaseous-fueled engines are less polluting and therefore, complex filters are not needed. Consequently, complexity (and as a side effect also noise, because gaseous-fueled engines are more silent) can be reduced, although it is well known that gaseous-fueled engines are rather disadvantageous for aircraft power supply applications. Gaseous-fueled engines require high pressure tanks, complex refuel procedures and they are less universal than diesel engines because they depend on the existence of gaseous fuel infrastructure at the airport, which is not always the case. Furthermore, they have a poor acceleration moment and cannot cope with sudden load changes that occur when power needs to be supplied to an aircraft (e.g., when the aircraft fuel pumps or flaps are tested, a high load is needed within a short accepted time). However, the inventors overcame this technical prejudice by thinking one inventive step ahead. The combination of the gaseous-fueled engine with the energy reservoir according to the invention helps to cover power demand peaks and the need of power while the gaseous-fueled engine adapts - more slowly than a diesel engine - to a higher load. An energy reservoir was, up to now, only considered for reducing fuel consumption of conventional fuel engines (diesel, petrol/gas), for being able to run the conventional fuel engine in optimal operational states - however, a combination of an energy reservoir with a gaseous-fueled engine was not considered as the gaseous-fueled engine already has a very low consumption and therefore, no further measures seemed necessary and it seemed to be a better solution to reduce consumption by using a diesel engine in combination with an energy reservoir instead of using a gaseous-fueled engine that comes with the aforementioned disadvantages. The inventors, however, use an energy reservoir for temporarily boosting the weaker transient behavior of the gaseous-fueled engine, so as to make the power output comparable to conventional fuel engines.

The engine may be understood as a combustion engine. It is gaseous-fueled, preferably with LPG (liquefied petroleum gas), particularly preferably with CNG (compressed natural gas). Preferably, the engine is run at a higher speed than equivalent diesel engines (equivalent: same constant power output), e.g., 3600/3000 RPM instead of 1800/1500 RPM for creating the same power output, which in turn is beneficial for a reduced pole number of the generator for generating the same power frequency.

Preferably, the mobile ground power stands on wheels. Usually, it is equipped with a towing arm. The GPU is preferably set up to output 3x200 V (phase-to-phase), 400 Hz of AC voltage (Vac). Preferably, the electric energy is carried from a generator to a connection on the aircraft via cables.

The generator may be a generator providing a directed output (e.g. by having a commutator). Alternatively, as stated in the next preferred embodiment, the generator may provide an alternating output (e.g. a 3-phase alternating output), which is rectified by a rectifier before being fed to the energy reservoir and/or the inverter. Preferably, the electric generator is a 2-pole brushless synchronous generator or a permanent magnet (synchronous) generator (PMG). The output voltage of a synchronous generator is preferably controlled by means of a traditional AVR (automatic voltage regulator), while the output from the PMG is given by the design and speed. Preferably, the GPU comprises a liquid cooling unit for the generator, wherein the liquid cooling unit is preferably cooling the engine as well.

Preferably, the electric energy reservoir provides a DC voltage output. It preferably comprises one or more capacitors or accumulators. For example the nominal voltage of one capacitor is preferably 2.7 V. To obtain a certain voltage safety margin, the operational voltage for the capacitors is selected to 2.6 V. Consequently, for obtaining a desired voltage of, for example, 350 V, 135 capacitors are serially connected.

Set up for being charged by an output of the generator may preferably be understood in the way that electric power generated by the generator is directable to the energy reservoir so as to charge the energy reservoir. Set up for temporarily providing electric power to the aircraft may preferably be understood in the way that electric power from the energy reservoir is, from time to time or constantly, sent to the aircraft. Preferably, energy from the energy reservoir is sent to the aircraft especially when the power supplied by the gaseous-fueled engine driven generator is not sufficient for powering the aircraft. Preferably, the electric energy reservoir provides output power at 350V DC and has a capacity of at least 3 Farad, whereby the energy reservoir's output power is transformed by the inverter into an alternating output. In a very simple configuration, the energy reservoir is connected (preferably directly) in parallel to a directed generator or to a rectifier output, preferably without further means for charge/discharge control.

By using the inverter, the energy from the energy reservoir can be used for loads using alternating current/voltage. The alternating power output of the inverter is to be supplied to the aircraft. The inverter is preferably a 400 Hz inverter. Preferably the inverter comprises a filter inductor (e.g., 30 µH) in each phase output and filter capacitors (e.g., 300 µF) between each phase output and the common reference output. Preferably, the inverter is cooled by a liquid cooling unit. Preferably, the inverter comprises one or more PWM activated electrical switches (transistors), e.g., IGBT's, thyristors.

In a further preferred embodiment according to this invention the GPU is further comprising a rectifier for converting the output of the generator to a rectified output of the rectifier and for supplying the rectified output to the energy reservoir. In a further preferred method according to this invention the output of the generator is rectified and then output to the energy reservoir.

Hereby, an AC voltage generator can be used. For example, one common energy reservoir can be used for the different phases of an AC voltage generator.

The rectifier is preferably a n*2-pulse rectifier, whereby n=number of phases and preferably n=3. Preferably, the rectifier is a diode rectifier. Preferably, the rectifier comprises a line inductor for reducing current and/or voltage harmonics.

The generator is preferably a 3-phase generator. The output frequency of the generator may have a value within a broad range of frequencies, e.g. between 20Hz and 800 Hz, because the generator output is rectified before being fed to the energy reservoir. For example, the output frequency of the generator could be smaller than the GPU/inverter output frequency (e.g., smaller than 400 Hz) by use of a standard 50 Hz or 60 Hz generator, which results in a less complex generator. Furthermore, the output frequency of the generator could be higher than the GPU output frequency (e.g., higher than 400 Hz), which leads to less ripple in the DC voltage. Still, in both scenarios, the output frequency may be variable by varying the engine speed, because the GPU output frequency is not depending on the generator output frequency.

In a further preferred embodiment according to this invention the energy reservoir is connected in serial with a switching element, preferably a thyristor, for controlling a discharge current from the energy reservoir and the serially connected energy reservoir and switching element are connected, preferably directly (e.g., in case of a generator with commutator) or indirectly (e.g., in case of an AC-generator with subsequent rectifier), to the generator. In a further preferred method according to this invention a switching element is controlling a discharge current from the energy reservoir.

Hereby, the support from the energy reservoir can be specifically dosed. Preferably, the switching element has at least two states: one conducting state and one non-conducting state.

In a further preferred embodiment according to this invention a bypass module, which comprises a unidirectional device or a second switching element, is connected in parallel to the switching element and set up for allowing a charging current to the energy reservoir independently of the state of the switching element. In a further preferred method according to this invention the energy reservoir is accordingly charged through a bypass module.

Hereby, the energy reservoir will receive surplus energy generated by the generator via the unidirectional device or the second switching element of the bypass module, even if the (first) switching element is in non-conducting state. The bypass module represents a dedicated charge path, separate from the discharge path. The unidirectional device is preferably a diode. The unidirectional device and the second switching element each prevent an unwanted discharge of the reservoir. When using the second switching element instead of the unidirectional device, an unwanted charging can be prevented, too - for example, if the energy reservoir is empty and high power needed is instantly at the inverter output, the second switching element can prevent/control a charging to the energy reservoir, such that no or only a limited power is used for charging the energy reservoir, if desired. Preferably, the bypass module further comprises a resistor, connected in serial with the unidirectional device or the second switching device. The resistor limits the charging current to a level, at which balancing modules (see below) may bypass it - i.e., balancing modules do not need to be oversized, they can have lower current ratings.

Preferably, the bypass module further (or as unidirectional element) comprises a switch, e.g. a transistor, serially connected to the unidirectional device and/or the resistor. By the switch, the reservoir may be disconnected in case of DC-link overvoltage or module failures.

In a further preferred embodiment according to this invention the energy reservoir comprises one or more energy storage modules, wherein each module comprises one or more energy storage devices connected in parallel with a charge balance module set up to bypass the one or more energy storage devices if an upper charge level is achieved. In a further preferred method according to this invention one or more energy storage modules of the energy reservoir are charged, wherein one or more energy storage devices of the energy storage module are bypassed by a charge balance module if an upper charge level is achieved.

Hereby, it is possible to compose the energy reservoir of a plurality of storage devices and at the same time compensate for device tolerances, as every storage device has an individual charge balance module assigned to it. As a result, the energy storage devices will have equalized charge levels.

An energy storage device is preferably a capacitor or an accumulator.

The charge balance module may preferably be understood as a module having a voltage probe measuring the storage device voltage and a switching element, wherein the switching element will be closed (conducting state) if the voltage measured by the voltage probe exceeds a predetermined level (upper charge level). Preferably, the charge balance module comprises a first serial connection of a Zener-diode (connected in reverse-direction) and a resistor, this first serial connection being connected in parallel to a second serial connection of a resistor and a transistor, wherein the base or gate of the transistor is connected between the diode and resistor of the first serial connection. If the voltage over the module exceeds a certain upper voltage, the Zener-diode will break down and get conducting. The current through the Zener-diode creates voltage drop over the resistor of the first serial connection. This voltage drop opens the transistor such that the transistor bypasses the energy storage device, connected in parallel to the charge balance module.

As an alternative to Zener-diode and resistor for activating the transistor, the balance module preferably comprises a comparator which preferably has an internal, preferably high precision voltage reference and/or a build in hysteresis. The comparator output is connected to the base or gate of the transistor and used to activate the transistor, when the voltage across the energy storage device reaches a certain threshold, e.g. the nominal value 2.7 V of the energy storage device.

In a further preferred embodiment or method according to this invention the energy reservoir comprises a plurality of said energy storage modules connected in parallel and/or serial to each other.

Hereby, the stored energy can be distributed over many different, balanced modules. Preferably, seven identical energy storage modules are connected in series, each module comprising nineteen capacitors (49.5 V per module). Each module has then an individual charge supervision by the respective charge balance module and preferably and error-detection-unit.

Preferably, the bypass module comprises a switch, which is opened (non-conductive), e.g. by a logical connection between the charge balance modules and this switch, if all the storage devices of the energy reservoir are charged. Hereby, losses through the transistor and resistor of the charge balance modules are minimized as charge current is cut off by the switch of bypass module as soon as charging is complete.

In a further preferred embodiment according to this invention the charge balance module comprises an error detection unit, which is set up to detect whether a voltage of the energy reservoir exceeds a maximally tolerated value and to provide an error signal if the voltage exceeds the maximally tolerated value. In a further preferred method according to this invention an error detection unit detects whether a voltage of the energy reservoir exceeds a maximally tolerated value and provides an error signal if the voltage exceeds the maximally tolerated value.

Hereby, an overload protection of the energy reservoir is provided. The error detection unit is preferably an error detection comparator. A voltage of the energy reservoir is for example a voltage across one or more energy storage devices (e.g. capacitor). The maximally tolerated value is preferably the maximum voltage of the energy storage device (e.g., 2.8V). Preferably, the error detection unit output is connected to the switching element, which is connected in serial to the energy reservoir (see above). Preferably, the error detection unit is connected via a logic level and/or optocoupler to this switching element. The error detection unit is preferably set up to disconnect the energy reservoir via this (or another) switch if the voltage of the energy reservoir exceeds or reaches the maximally tolerated value. Preferably, each of the energy storage modules comprises an error-detection-unit.

In a further preferred embodiment according to this invention the combination of the engine, the generator, if existing the rectifier, and the energy reservoir is set up to provide a DC voltage to the inverter that is limited to being smaller or equal than k times a desired output AC voltage of the inverter, wherein k=3. In a further preferred method according to this invention, the ground power unit is controlled to provide a DC voltage to the inverter that is limited to being smaller or equal than k times a desired output AC voltage of the inverter, wherein k=3.

Hereby, the DC voltage can be transformed advantageously into an AC voltage. The switching losses and the ripple of the inverter output are at a reasonably low level and at the same time, no step-up/step-down (isolation) transformer (as e.g. in EP 1 756 937 Fig. 3b) is needed, because the two voltages are sufficiently adjusted to each other. The inverting part of the GPU can therefore be more compact. This relation between DC voltage and desired output AC voltage (e.g. according the specification of the aircraft) is preferably configured by a suitable operation control of the GPU, e.g. a voltage control of the generator or rectifier and the different units are chosen to meet the corresponding voltage specifications. Limited to being smaller preferably means that except for only minor deviations within tolerated levels and times according to the specification of the electronic devices or voltage output specifications (e.g. specifications imposed by the aircraft), this upper voltage limit is not exceeded; most preferably it means, that the voltage is always smaller or equal than the limit.

In the following, three examples are given, wherein in each example, the desired AC output voltage is 3x200 Vac:
1. The DC voltage provided by the combination of engine, the generator, if existing the rectifier, and the energy reservoir is 600 V, hence, three times the desired AC voltage. In this case, the inverter is preferably equipped with IGBTs rated for at least 600 V or at least 650 V. Considering the usually applied and recommended safety margin given by the IGBT manufacturer, the inverter is more preferably equipped with IGBTs rated for at least 900 V. Using this (in comparison to the following examples) high DC voltage, a maximum output voltage is comparably high, at about 3x420 Vac, and hence there is a high flexibility to compensate for voltage drops due to further output filters or the cables leading to the aircraft. On the downside, using this high DC voltage creates still comparably high ripple and losses when inverting it to the desired output voltage. However, as the DC is voltage is not higher than three times the desired AC voltage, this is still acceptable without using an additional step-down transformer.
2. DC voltage is 400 V, hence, two times the desired AC voltage. In this case, the inverter is most preferably equipped with 600 V or 650 V IGBTs, resulting in a sufficient safety margin. A maximum output voltage is now at 3x280 Vac. The capability of compensation for further voltage drops (filter, cable) is lower than in the first example; however, the inversion comes with less ripple and less loss compared to the first example.
3. DC voltage is 345 V, hence 1.75 times the desired AC voltage. The inverter is preferably equipped with 600 V or 650 V IGBTs, according availability it could be even 520 V IGBTs. The maximum output voltage is at 3x240 Vac. In this scenario, there is less (but for usual applications sufficient) compensation capability (filter, cable) but the inversion comes with very low losses and ripple.

It can be seen that the smaller the factor k, the lower the losses and ripple and compensation ability; and the higher the factor k, the higher losses and ripple and compensation ability. The right factor can be chosen according to the need of the application, compromising between efficiency and compensation ability. According to this embodiment, to limit losses and ripple, k is smaller or equal 3, preferably smaller or equal 2, or most preferred smaller or equal 1.75.

In a further preferred embodiment or method according to this invention the inverter is an n phase, preferably n=3, n+1 legged inverter.

Hereby, the output power can be shaped by the inverter with great flexibility, because the common reference for the phases is controllable as well and furthermore, the common reference does not need to be provided by a subsequent transformer or be generated by being tapped between two capacitors (EP 1 756 937 Fig. 3a). The use of a transformer would be complex and tapping the common reference between capacitors comes with undesired losses through the capacitors.

The topology of the n-phase inverter consists of n+1 legs; each leg includes a switch in either the up or down position (single pole, double throw). This switch is preferably realized by two serially connected electrical switches (each a single pole, single throw, e.g. transistor, IGBT, preferably 650 V IGBT), wherein the leg's output is tapped between the switches and each of these switches is bypassed by a diode (or another switch) in reverse direction. N legs are generating the output for each phase, wherein the n+1^{st} leg is generating the output of the reference common to all phases. The electrical switches are preferably activated by PWM. Both Space Vector PWM and Discontinuous PWM can be applied to obtain 15% more utilization of the dc link voltage. DPWM is preferred due to lower switching losses compared to SVPWM.

In a further preferred embodiment or method according to this invention the energy reservoir comprises at least one double layer capacitor, preferably snap-in type, preferably a supercapacitor, as an energy storage device.

Hereby charging and discharging is quicker and lifetime of the energy storage device(s) is longer compared to an energy reservoir comprising batteries.

In a further preferred embodiment or method according to this invention the generator has less than 4, preferably exactly 2, poles.

Hereby, in contrast to usual configurations of GPUs, where a high frequency (400 Hz) is needed to be generated by the generator, making a high number of poles necessary, a generator with a small number of poles can be used. As the frequency generated by the generator is not the frequency of the output of the inverter, lower generator frequencies are acceptable. Based on cost, size and weight a 2-pole generator is most preferred compared to higher pole-numbers.

In a further preferred embodiment according to this invention the GPU is further comprising a control unit for controlling the speed of the gaseous-fueled engine according to one or more parameters. In a further preferred method according to this invention the speed of the gaseous-fueled engine is controlled accordingly.

Hereby, the operation of the GPU can be adapted advantageously to different constraints, whereby the variable power output due to the speed changes and eventually caused power shortages can be compensated by the electric energy reservoir. Important parameters are for example fuel consumption, acoustical noise level and needed power or generator excitation (voltage). For example, if a load jump is detected, the switching element connected in serial with the energy reservoir is turned ON (conducting) to support the load and the engine speed will be increased. Afterwards the engine will stay at a speed sufficiently high to charge the super capacitors to their upper charge level (which may be a speed a bit higher than needed for only supporting the load), and subsequently the speed will be adjusted (e.g. reduced) to obtain lowest possible fuel consumption at the current load. Preferably, whenever a load jump occurs, the energy reservoir will supply a major part of the load while the CNG engine is accelerated up to the speed where it can sustain the load. Preferably, according to the control, low load corresponds to low speed and high load corresponds to high speed. For example, depending on the engine, a 5 % consumption reduction may be achieved by operating the engine at about 2900 RPM instead of 3600 RPM.

In a further preferred embodiment according to this invention the GPU is further comprising a control unit for controlling an excitation of the generator according to one or more parameters. In a further preferred method according to this invention the excitation of the generator is accordingly controlled.

By this alternative or additional provisioning of the GPU, the operation of the GPU can be adapted advantageously to different constraints, whereby the variable power output capability due to the speed changes and eventually caused power shortages can be compensated by the electric energy reservoir. Important parameters are for example fuel consumption, acoustical noise level and needed power and furthermore speed of the engine. For example, when the speed of the engine is reduced, the excitation voltage is reduced to avoid saturation of the generator. Furthermore, by lowering the excitation voltage at reduced loads, inverter losses are reduced.

In a further preferred embodiment according to the present invention, the GPU is further comprising a control unit for controlling the inverter according to one or more parameters. In a further preferred method according to this invention the inverter is controlled accordingly.

By this alternative or additional provisioning of the GPU, the operation of the GPU can be adapted advantageously to different constraints, whereby the variable power output due to the speed changes and eventually caused power shortages can be compensated by the electric energy reservoir. For example, the inverter is controlled to obtain a desired (peak) voltage level and/or to compensate the effect of an unbalanced or non-linear load and/or to compensate for the cable voltage drop, which occurs along the cable from the GPU to the aircraft. For example for compensating a non-linear load that creates a harmonic component (e.g., 3^{rd} harmonic) the compensation is done by measuring the harmonic component at the GPU output and creating a coinciding but 180°-phase shifted harmonic by the inverter, which in consequence cancels out the undesired harmonic component. Preferably, a closed loop control is performed (and the GPU is configured to perform such a control) by subtracting a measured power output voltage from a desired output voltage (result: distortion), inputting this difference to a controller, e.g. PI or PID controller, that is driving the difference to zero. Thereby, the controller is adding or subtracting its control output to the control (e.g. PWM control) of the inverter.

Embodiments of the present invention will now be described - by way of example only - with reference to the accompanying drawings, whereby
Fig. 1 is an overview of a GPU according to the invention,
Fig. 2 shows a specific embodiment of the energy reservoir of a GPU based on Fig. 1 having an energy storage module, an energy storage device and a charge balance module and it is connected in serial with a switching element and a bypass module,
Fig. 3 shows a specific embodiment of a GPU based on Fig. 1 and/or Fig. 2 including a combined control unit,
Fig. 4 shows a specific inverter of a GPU based on Fig. 1, Fig. 2 and/or Fig. 3.

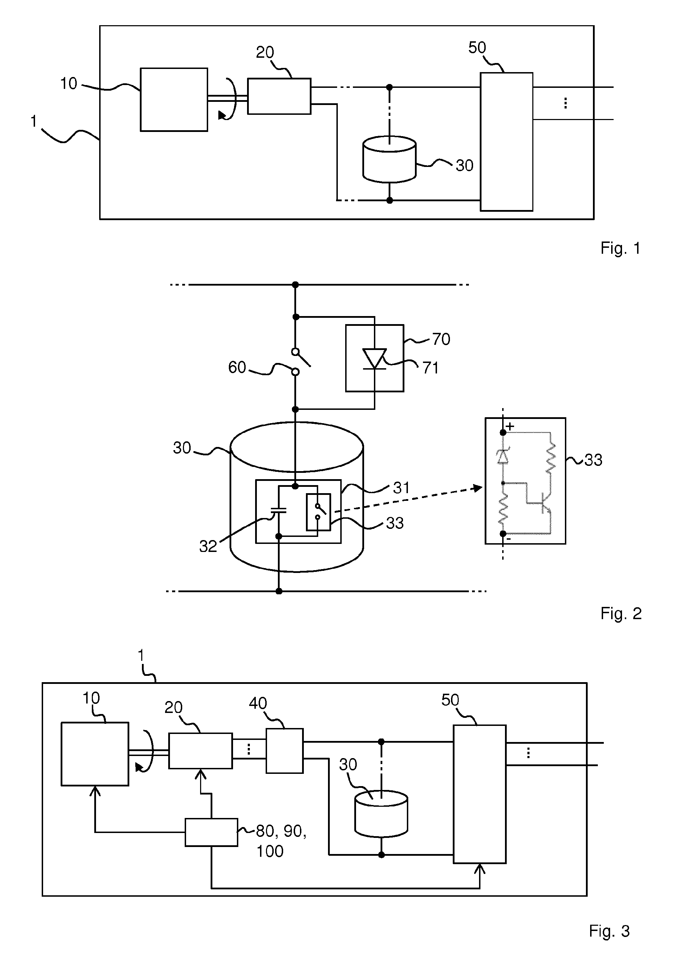

**Fig. 1** is an overview of a GPU 1 according to the invention. It comprises an engine and an electric generator 20 for supplying power to the aircraft, whereby the electric generator 20 is configured to be driven by the engine. The engine is a gaseous-fueled engine 10 and the GPU 1 further comprises an electric energy reservoir 30, which is set up for being charged by an output of the generator 20 and set up for temporarily providing electric power to the aircraft. The GPU 1 further comprises an inverter 50 for transforming an output of the energy reservoir 30 to an alternating power output of the inverter 50. The generator 20 may be an AC-generator with a subsequent rectifier connected (cf., Fig. 3) or a DC-generator.

The GPU 1 is being operated comprising the steps:
- running the gaseous-fueled engine 10;
- supplying power to the aircraft by the electric generator 20 of the aircraft, whereby the electric generator 20 is driven by the engine;
- charging the electric energy reservoir 30 by the output of the generator 20;
- temporarily providing electric power from the energy reservoir 30 to the aircraft; whereby an output of the energy reservoir 30 is transformed to an alternating power output by the inverter 50.

Hereby, fuel consumption and noise can be reduced by using the gaseous-fueled engine 10 and at the same time, the transient behavior of the GPU 1 after load changes meets necessary requirements due to the temporary support by the energy reservoir 30, although the gaseous-fueled engine 10 has a worse transient behavior compared to conventional diesel engines.

**Fig. 2** shows a specific embodiment of the energy reservoir 30 of a GPU 1 based on Fig. 1, which has an energy storage module 31, an energy storage device 32 and a charge balance module 33 and which is connected in serial with a switching element 60 and a bypass module 70. The energy reservoir 30 is connected in serial with the switching element 60 for controlling a discharge current from the energy reservoir 30 and the serially connected energy reservoir 30 and switching element 60 are connected to the generator 20. The GPU 1 comprises a bypass module 70, which comprises a unidirectional device 71, here a diode (alternatively, a second switching device could be used instead of the unidirectional device 71, as described in the general part of the description). The bypass module 70 is connected in parallel to the switching element 60 and set up for allowing a charging current to the energy reservoir 30 irrespective of a state of the switching element 60. The energy reservoir 30 comprises one (it could be more) energy storage module 31, comprising one (it could be more) energy storing device 32 connected in parallel with a charge balance module 33. The energy storage device 32 is a double layer capacitor. The charge balance module 33 is set up to bypass the energy storage device 32 if an upper charge level is achieved. The charge balance module 33, which is shown in more detail on the right, comprises a first serial connection of a Zener-diode (connected in reverse-direction) and a resistor, this first serial connection being connected in parallel to a second serial connection of a resistor and a transistor, wherein the base or gate of the transistor is connected between the diode and resistor of the first serial connection.

During operation of the GPU 1, the energy reservoir 30 is charged by a charge current through the bypass module 70. Automatic discharging is prevented by the diode 71. The discharging (i.e. supplying power from the energy reservoir to the aircraft) is controlled through switching element 60. The charge balance module 33 is bypassing the storage device 32 if a certain charge level is exceeded.

**Fig. 3** shows a specific embodiment of a GPU 1 based on Fig. 1 and/or Fig. 2 including a combined control unit 80, 90, 100. The GPU 1 comprises a rectifier 40 for converting the output of the generator 20 to a rectified output of the rectifier 40 and for supplying the rectified output to the energy reservoir 30. It further comprises an inverter 50 for transforming an output of the energy reservoir 30 and the output of the rectifier 40 to an alternating power output of the inverter 50, which is to be supplied to the aircraft. The combined control unit comprises a control unit 80 for controlling the speed of the gaseous-fueled engine 10 according to one or more parameters, a control unit 90 for controlling an excitation of the generator 20 according to one or more parameters, a control unit 100 for controlling the inverter 50 according to one or more parameters.

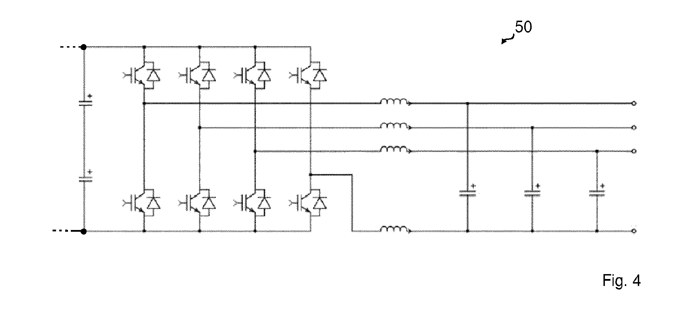

**Fig. 4** shows a specific inverter 50 of a GPU 1 based on Fig. 1, Fig. 2 and/or Fig. 3. The inverter 50 is a transformer-less, 3 phase, 4 legged inverter. Each leg includes two serially connected IGBT's, wherein each IGBT is bypassed by a diode in reverse direction and the leg's output is tapped between the IGBT's. Three legs are generating the output for each phase, wherein the fourth leg is generating the output of the reference common to all phases. The electrical switches are activated by PWM. The inverter is a 400 Hz inverter and comprises a filter inductor of 30 µH in each phase output and filter capacitors between each phase output and the common reference output. Additionally, serially connected input capacitors reduce DC voltage harmonics. With this inverter, a very flexible and efficient (low losses) inversion of the DC power from the electric energy reservoir to the desired output power for the aircraft is provided. The 4-legged inverter ensures respectively a very high utilization of the DC-link voltage as well as individual phase regulation.

With this invention an efficient, low-noise GPU has been introduced. Instead of using a conventional diesel engine and trying to optimize consumption, a gaseous-fueled engine is used, although the dynamic performance of a gaseous-fueled engine, especially in the case of sudden load changes, is not sufficient. To compensate for the worse transient performance, the invention combines a gaseous-fueled engine with an energy reservoir.

### Reference signs

- 1: ground power unit
- 10: gaseous-fueled engine
- 20: generator
- 30: electric energy reservoir
- 31: energy storage module
- 32: energy storage device
- 33: charge balance module
- 40: rectifier
- 50: inverter
- 60: switching element
- 70: bypass module
- 71: unidirectional device
- 80: speed control unit
- 90: excitation control unit
- 100: inverter control unit

## Claims

1. Ground power unit (1) for supplying power to an aircraft parked on the ground, the ground power unit (1) comprising
- an engine and
- an electric generator (20) for supplying power to the aircraft, whereby the electric generator (20) is configured to be driven by the engine,
- an electric energy reservoir (30), which is set up for being charged by an output of the generator (20) and set up for temporarily providing electric power to the aircraft,
- an inverter (50) for transforming an output of the energy reservoir (30) to an alternating power output of the inverter (50),
**characterized in that**
the engine is a gaseous-fueled engine (10).

2. Ground power unit (1) according to one of the preceding claims, further comprising a rectifier (40) for converting the output of the generator (20) to a rectified output of the rectifier (40) and for supplying the rectified output to the energy reservoir (30).

3. Ground power unit (1) according to claim 1 or 2, wherein the energy reservoir (30) is connected in serial with a switching element (60) for controlling a discharge current from the energy reservoir (30) and the serially connected energy reservoir (30) and switching element (60) are connected to the generator (20).

4. Ground power unit (1) according to claim 3, wherein a bypass module (70), which comprises a unidirectional device (71) or a second switching element, is connected in parallel to the switching element (60) and set up for allowing a charging current to the energy reservoir (30) irrespective of a state of the switching element (60).

5. Ground power unit (1) according to one of the preceding claims, wherein the energy reservoir (30) comprises one or more energy storage modules (31), wherein each module comprises one or more energy storage devices (32) connected in parallel with a charge balance module (33) set up to bypass the one or more energy storage devices (32) if an upper charge level is achieved.

6. Ground power unit (1) according to claim 5, wherein the energy reservoir (30) comprises a plurality of said energy storage modules (31) connected in parallel and/or serial to each other.

7. Ground power unit (1) according to one of the preceding claims, further comprising an error detection unit, which is set up to detect whether a charge voltage of the energy reservoir (30) exceeds a maximally tolerated value and to provide an error signal if the voltage exceeds the maximally tolerated value.

8. Ground power unit (1) according to one of the preceding claims, wherein the combination of the engine, the generator, if existing the rectifier, and the energy reservoir is set up to provide a DC voltage to the inverter that is limited to being smaller or equal than k times a desired output AC voltage of the inverter, wherein k=3.

9. Ground power unit (1) according to one of the preceding claims, wherein the inverter (50) is an n phase, n+1 legged inverter.

10. Ground power unit (1) according to one the preceding claims, wherein the generator (20) has less than 4 poles.

11. Ground power unit (1) according to one the preceding claims, further comprising a control unit (80) for controlling the speed of the gaseous-fueled engine (10) according to one or more parameters.

12. Ground power unit (1) according to one the preceding claims, further comprising a control unit (90) for controlling an excitation of the generator (20) according to one or more parameters.

13. Ground power unit (1) according to one the preceding claims, further comprising a control unit (100) for controlling the inverter (50) according to one or more parameters.

14. Method for powering an aircraft parked on the ground by a ground power unit (1) comprising the steps:
- running an engine of the ground power unit (1);
- supplying power to the aircraft by an electric generator (20) of the ground power unit (1), whereby the electric generator (20) is driven by the engine;
- charging an electric energy reservoir (30) of the ground power unit (1) by an output of the generator (20);
- temporarily providing electric power from the energy reservoir (30) to the aircraft; whereby an output of the energy reservoir (30) is transformed to an alternating power output by an inverter (50),
**characterized in that**
the engine is a gaseous-fueled engine (10).
